# EUROPEAN PATENT SPECIFICATION

(11) **EP 3 919 690 B1**
(45) Date of publication and mention of the grant of the patent: **06.11.2024**
(21) Application number: 20774000.2
(22) Date of filing: 02.03.2020
(51) Int. Cl.: E02F 9/12, F16L 27/08, E02F 9/00, E02F 9/22, E02F 9/26

(54) **SWIVEL JOINT FOR CONSTRUCTION MACHINE**
DREHGELENK FÜR BAUMASCHINEN
JOINT PIVOTANT POUR ENGIN DE CHANTIER

(30) Priority: 20.03.2019 JP 2019052060
(43) Date of publication of application: 08.12.2021
(73) Proprietor: KOBELCO CONSTRUCTION MACHINERY CO., LTD., Hiroshima-shi, Hiroshima 731-5161 (JP)
(72) Inventor: OKADA, Shuji, Hiroshima-shi, Hiroshima 731-5161 (JP); TAKEDA, Kazuyuki, Hiroshima-shi, Hiroshima 731-5161 (JP); NII, Haruo, Hiroshima-shi, Hiroshima 731-5161 (JP); MOCHIZUKI, Daisuke, Hiroshima-shi, Hiroshima 731-5161 (JP)
(74) Representative: TBK
(86) International application number: PCT/JP2020/008767
(87) International publication number: WO 2020/189246

(56) References cited:
- JP-A- 2000 008 418
- JP-A- 2017 082 494
- JP-B2- 3 343 511
- JP-B2- 5 135 299
- JP-U- S6 360 793

## Description

### Technical Field

The present invention relates to a swivel joint to be provided at a slewing center of a construction machine, such as a hydraulic excavator.

### Background Art

Technologies concerning a swivel joint to be provided in a slewing section for connecting a lower traveling body and an upper slewing body with each other have been conventionally proposed in the field of construction machines.

For instance, JP 2016 003519 A discloses a swivel joint for connecting an upper pipe and a lower pipe with each other at a center of a slewing bearing.

Specifically, the swivel joint includes a hollow cylindrical body to be fixedly attached to a lower frame of the lower traveling body, and a cylindrical stem to be fixedly attached to an upper frame of the upper slewing body and rotatably fitted in the body. The stem is formed with a drain hole axially extending therethrough at a center of an upper surface thereof.

JP 2017 082494 A discloses, as another technology, a swivel joint as specified in the preamble of claim 1, the swivel j oint including a rotation angle sensor for detecting a slewing angle of the upper slewing body, and a rod.

Specifically, the rod is inserted through an axially extending pilot oil passage to detect the slewing angle of the upper slewing body. The rod has an upper end spaced from the rotation angle sensor attached to an inner body to face the sensor.

JP 5 135 299 B2 discloses a swivel joint that is configured to prevent mixing of hydraulic oil into fuel when a seal member provided between fitting parts in a cover body and an internal rotating body is damaged to cause leakage of the hydraulic oil.

It is conceived from JP 2016 003519 A and JP 2017 082494 A to provide a sensor unit (including a rotation angle sensor and a rod) for detecting a slewing angle of an upper slewing body by using an oil passage and a drain hole defined at a slewing center of the stem.

However, such a configuration of inserting a rod into an oil passage and a drain hole defined at a slewing center of the stem has a possibility of a leakage of a hydraulic oil from the oil passage in operations of inserting and withdrawing the rod thereinto and therefrom, and thus faces a maintainability problem.

### Summary of Invention

An object of the present invention is to provide a swivel joint for a construction machine, which includes a sensor unit for detecting a slewing angle of an upper slewing body and suppresses an oil leakage at insertion and withdrawal of the rod.

Provided by the present invention is a swivel joint for a construction machine which includes a lower traveling body having a lower pipe, an upper slewing body having an upper pipe, and a slewing section for connecting the lower traveling body and the upper slewing body with each other in such a manner that the upper slewing body is slewable about a slewing central axis extending in a vertical direction, the swivel joint to be provided in the slewing section. The swivel joint includes: a body fixedly attachable to the lower traveling body, having a hollow cylindrical shape centered on the slewing central axis, and having an upper opening and a lower opening; a lower cover mounted to the body to close the lower opening of the body, and having an attachment hole vertically extending through the lower cover along the slewing central axis; a stem fixedly attachable to the upper slewing body, having a cylindrical shape centered on the slewing central axis, and fitted in a cylindrical inner part of the body through the upper opening of the body rotatably about the slewing central axis relative to the body; and a sensor unit for detecting a slewing angle of the upper slewing body with respect to the lower traveling body. The stem has a lower surface portion facing the lower cover, and is formed with: a sensor placement space overlapping the slewing central axis; a rod insertion hole extending along the slewing central axis and communicating the sensor placement space and the lower surface portion with each other to face the attachment hole; and a stem-side drain oil passage spaced radially outward from the rod insertion hole in the stem and configured to communicate with the upper pipe for permitting a drain oil to flow in the vertical direction. The lower cover has a cover-side drain oil passage isolated from the rod insertion hole and the attachment hole and configured to communicate the stem-side drain oil passage of the stem and the lower pipe with each other in a state where the lower cover is mounted to the body. The sensor unit includes: a rotation angle sensor placed in the sensor placement space of the stem in such a manner as to be rotatable integrally with the stem about the slewing central axis; and a rod extending in the vertical direction. The rod has a rod distal end provided with a detection target to be detected by the rotation angle sensor, and a rod proximal end which is detachably attached in the attachment hole of the lower cover so that the rod distal end is inserted through the rod insertion hole from the attachment hole of the lower cover to a position where the detection target is detected by the rotation angle sensor and that the rod distal end is withdrawn below the attachment hole from the rod insertion hole in the state where the lower cover is mounted to the body. The rod is rotatable with the body about the slewing central axis relative to the stem.

### Brief Description of Drawings

Fig. 1 is a sideview of a hydraulic excavator according to an embodiment of the present invention.
Fig. 2 is a sideview of an appearance of a swivel joint according to the embodiment of the present invention.
Fig. 3 is a bottom view of the swivel joint in Fig. 2 seen along the arrow III.
Fig. 4 is a plan view of the swivel joint in Fig. 2 seen along the arrow IV
Fig. 5 is a cross-sectional view of the swivel joint in Fig. 2 taken along the line V-V.
Fig. 6 is a cross-sectional view of the swivel joint in Fig. 2 taken along the line VI-VI.
Fig. 7 is a cross-sectional view showing a state where a rod is removed from the swivel joint in Fig. 6.
Fig. 8 is a cross-sectional view of the swivel joint in Fig. 4 taken along the line VIII-VIII.
Fig. 9 is a cross-sectional view of the swivel joint in Fig. 4 taken along the line IX-IX.
Fig. 10 is a sideview of a swivel joint according to a modified embodiment of the present invention.

### Description of Embodiments

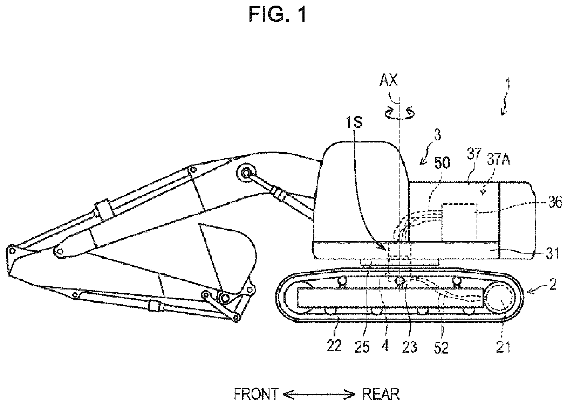

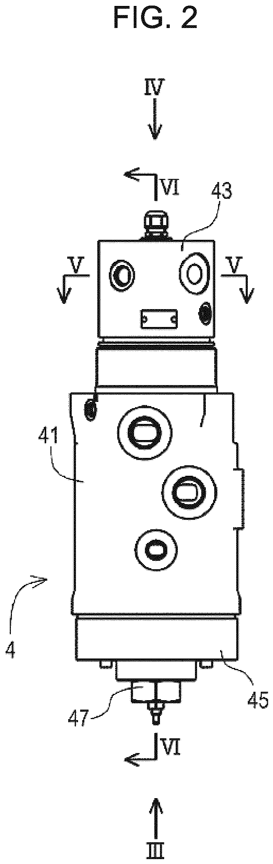

A swivel joint for a construction machine according to an embodiment of the present invention will be described with reference to Figs. 1 to 9. Hereinafter, a hydraulic excavator 1 (see Fig. 1) serving as an exemplary construction machine and a swivel joint 4 (see Fig. 2) serving as an exemplary swivel joint will be described.

As shown in Fig. 1, the hydraulic excavator 1 includes a lower traveling body 2, an upper slewing body 3 slewably mounted on the lower traveling body 2, and a slewing section 1S incorporating a slewing bearing 25. The lower traveling body 2 includes a hydraulic traveling motor 21, a pair of left and right crawlers 22 rotatably driven by the traveling motor 21, a lower frame 23, and a lower pipe 52 connected to the traveling motor 21. The slewing section 1S connects the lower traveling body 2 and the upper slewing body 3 with each other in such a manner that the upper slewing body 3 is slewable about a slewing axis AX (slewing central axis) extending in a vertical direction.

The upper slewing body 3 has an upper frame 31, a machine chamber 37A, a machine chamber cover 37, and an upper pipe 50. The upper frame 31 is supported by the lower traveling body 2 via the slewing bearing 25, and forms a base of the upper slewing body 3. The upper frame 31 is configured to be slewable about the slewing axis AX.

The machine chamber 37A accommodates an unillustrated engine and hydraulic devices (e.g., a control valve 36 and a hydraulic pump). The machine chamber cover 37 is provided to cover the machine chamber 37A.

The slewing section 1S includes the swivel joint 4 provided at the center of the slewing bearing 25. The swivel joint 4 is a member having a vertically long and substantially cylindrical shape to stand in a central portion of the lower frame 23 with a center of the swivel joint 4 being on the slewing axis X. The swivel joint 4 connects the upper pipe 50 leading to the control valve 36 of the upper slewing body 3 and the lower pipe 52 leading to the traveling motor 21 of the lower traveling body 2 with each other therebetween.

As shown in Fig. 2, the swivel joint 4 includes a body 41, a stem 43 rotatably fitted in the body 41, a cover 45 (lower cover), and a cover 47 (auxiliary cover). The cover 45 and the cover 47 constitute a cover unit 44.

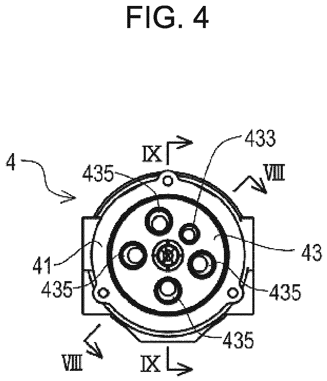

As shown in Figs. 2 and 4, the body 41 is a member fixedly attachable to the lower frame 23 of the lower traveling body 2 and having a hollow cylindrical shape centered on the slewing axis AX, the body being referred to as a lower swivel as well. The body 41 opens at an upper end and a lower end respectively, that is, has an upper opening and a lower opening.

As shown in Figs. 2, 4, and 5, the stem 43 is a member fixedly attachable to the upper frame 31 of the upper slewing body 3 and having a cylindrical shape centered on the slewing axis AX, the stem being referred to as an upper swivel as well. The stem 43 is fitted in a cylindrical inner part of the body 41 through the upper opening of the body 41 rotatably about the slewing axis AX relative to the body 41. The stem 43 has a lower surface portion facing the cover 45.

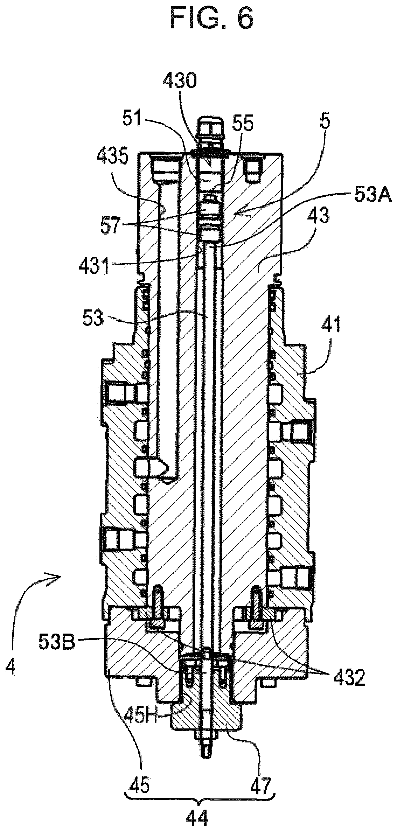

As shown in Fig. 6, the stem 43 further has a thrust plate 432 at the lower end of the stem 43. The thrust plate 432 is a member for preventing the stem 43 from leaving out of the body 41 in a slewing axial direction.

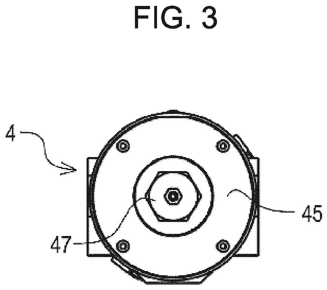

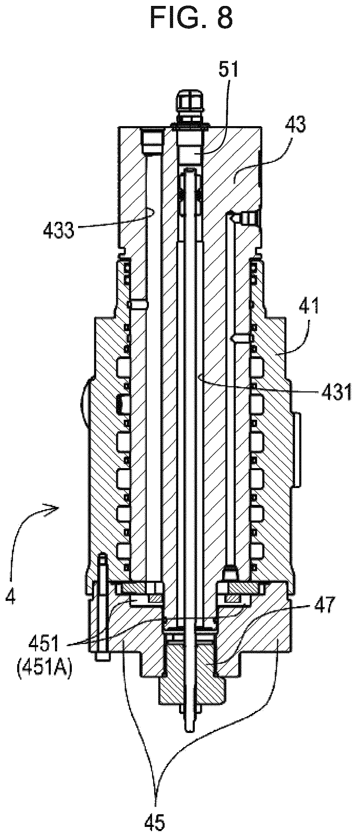

As shown in Figs. 3 and 8, the cover 45 is fastened to a lower portion of the body 41 with bolts. The cover 45 is mounted to the body 41 to close the lower opening of the body 41. As shown in Fig. 6, the cover 45 has an attachment hole 45H vertically extending through the cover 45 along the central axis (slewing axis AX) of the stem 43 for receiving the cover 47 (which will be described later) to be attached therein. In other words, the cover 45 has a doughnut shape. The cover 45 serves as an exemplary first cover according to the present invention.

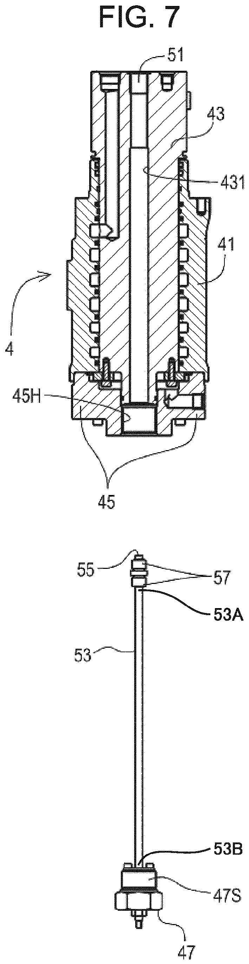

As shown in Figs. 3 and 6, the cover 47 is attached to the cover 45 via the attachment hole 45H. Specifically, the attachment hole 45H of the cover 45 is defined by a female thread, and a fastening part 47S (see FIG. 7) of the cover 47 is formed with a male thread, and the cover 47 is screwed in the attachment hole 45H of the cover 45.

Here, the cover 45 is fixedly mounted to the body 41 as described above, and thus the mounting state of the cover 45 to the body 41 is maintained even when the cover 47 is detached from the cover 45 (see FIG. 7)

As shown in Fig. 6, the swivel joint 4 further includes a sensor unit 5 for detecting a slewing angle of the upper slewing body 3 with respect to the lower traveling body 2. The sensor unit 5 includes a rotation angle sensor 51 and a rod 53.

The rotation angle sensor 51 is fixedly attached to the upper end of the stem 43 and rotates together with the stem 43 while following the slewing of the upper slewing body 3. That is to say, the rotation angle sensor 51 is placed in a sensor placement space 430 of the stem 43 in such a manner as to be rotatable integrally with the stem 43 about the slewing axis AX.

The rod 53 is a member having a rod shape and provided with a magnet 55 to be detected by the rotation angle sensor 51 on a tip thereof. The rod 53 has a rod distal end 53A and a rod proximal end 53B, and extends in the vertical direction (axial direction of the slewing axis AX).

The rod distal end 53A of the rod 53 has a tip surface portion formed with an unillustrated countersink (recess) for receiving the magnet 55 (detection target) to be fitted therein to face the rotation angle sensor 51. The countersink has such a size, i.e., 0.5 millimeter (mm) or less here, as not to affect a magnetic field density of the magnet 55.

The magnet 55 is arranged in the countersink in the tip surface portion of the rod 53, and is directly adhered to the rod distal end 53A with an adhesive. As a result, the rod distal end 53A is provided with the magnet 55 to be detected by the rotation angle sensor 51. The rod proximal end 53B of the rod 53 is directly and separably fastened to the cover 47 in a threaded engagement. The cover 47 consequently holds the rod proximal end 53B after the rod proximal end 53B is fastened to the cover 47. Moreover, the rod 53 is rotatable with the body 41 about the slewing axis AX relative to the stem 43.

The cover 47 is fastened to the cover 45, and the cover 45 is fixedly mounted to the body 41. Particularly, the cover 47 is detachably attached to the cover 45 in such a manner as to close the attachment hole 45H of the cover 45. The body 41 is fixedly attached to the lower traveling body 2. Therefore, unlike the rotation angle sensor 51, the rod 53 fastened to the cover 47 and the magnet 55 provided on the tip of the rod 53 avoid following the slewing of the upper slewing body 3. As an additional remark for the rod proximal end 53B, the rod proximal end 53B is detachably attached in the attachment hole 45H of the cover 45 so that the rod distal end 53A is inserted through the rod hole 431 from the attachment hole 45H of the cover 45 to a position where the magnet 55 is detected by the rotation angle sensor 51 and that the rod distal end 53A is withdrawn below the attachment hole 45H from the rod hole 431 in the state where the cover 45 is mounted to the body 41.

The rotation angle sensor 51 and the magnet 55 are preferably concentric with each other to accurately detect the slewing angle of the upper slewing body. Therefore, in this embodiment, the distal end of the rod 53 is provided with a collar 57 (restrictive member). The collar 57 is a member for suppressing a run-out of the rod 53 and is made of a nonmagnetic resin material. Specifically, the collar 57 is located on the rod distal end 53A and has an outer diameter larger than an outer diameter of the rod 53. The collar 57 restricts a relative position of the magnet 55 to the rotation angle sensor 51 in a direction perpendicularly intersecting the axial direction of the slewing axis AX.

As shown in Fig. 7, the attachment hole 45H for receiving the cover 47 to be attached therein is configured to have an inner diameter larger than the outer diameter of the collar 57. This aims at allowing the rod 53 provided with the collar 57 to be inserted through and withdrawn from the rod hole 431.

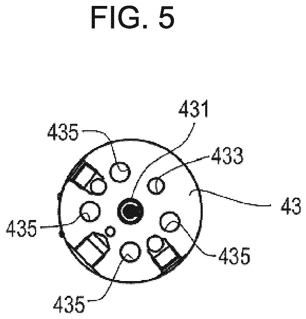

As shown in Fig. 5, the stem 43 is formed with the sensor placement space 430, the rod hole 431 (rod insertion space) axially extending along the central axis of the stem 43, a drain hole 433 (stem-side drain oil passage) axially extending at a position deviating from the central axis of the stem 43, and four vertical holes 435 axially extending at corresponding positions deviating from the central axis of the stem 43. The sensor placement space 430 is in the upper end of the stem 43 and overlaps the slewing axis AX. The rod hole 431 communicates the sensor placement space 430 and the lower surface portion of the stem 43 with each other, and extends along the slewing axis AX to face the attachment hole 45H. The drain hole 433 is spaced radially outward from the rod hole 431 in the stem 43 and communicating with the upper pipe 50 for permitting a drain oil to flow in the vertical direction.

As shown in Fig. 7, the rod hole 431 is a dedicated hole for allowing the rod 53 to be inserted therethrough and withdrawn therefrom without allowing the oil to pass therethrough. As shown in Fig. 6, the rod 53 fastened to the cover 47 is inserted through the rod hole 431 from the attachment hole 45H when the cover 47 is attached to the cover 45. The magnet 55 on the tip of the rod 53 accordingly approaches the rotation angle sensor 51.

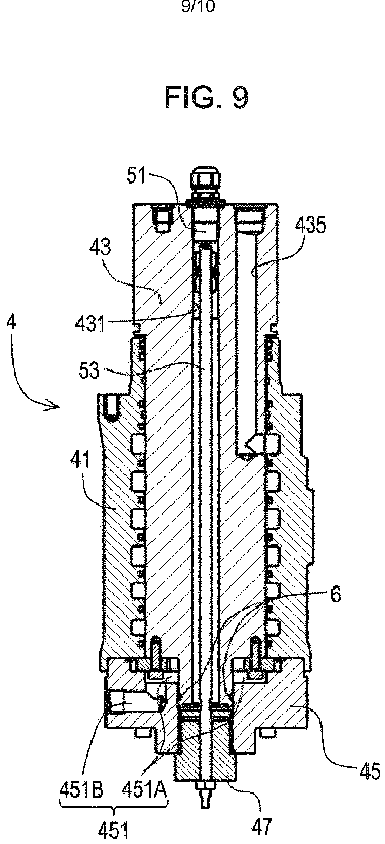

As shown in Fig. 8, the drain hole 433 allows the drain oil to pass therethrough and communicates with a drain oil passage 451 (cover-side drain oil passage, i.e., hatched area in FIG. 9) formed in the cover 45. The drain oil passage 451 is isolated from the rod hole 431 and the attachment hole 45H for communicating the drain hole 433 of the stem 43 and the lower pipe 52 with each other in the state where the cover 45 is mounted to the body 41.

As shown in Fig. 9, the drain oil passage 451 includes an oil chamber 451A having a doughnut shape and provided along an outer circumference of the stem 43, and an L-oil passage 451B having an L-shape for connecting the oil chamber 451A and a side surface portion of the cover 45 with each other. As shown in Fig. 8, the drain hole 433 communicates with the oil chamber 451A of the drain oil passage 451.

As shown in FIG. 9, a contact portion between the stem 43 and the cover 45 is provided with a sealant 6 for preventing a leakage of the drain oil. The sealant 6 is an elastic member having a link shape, and is disposed between the stem 43 and the cover 45 for keeping the oil from flowing into the rod hole 431 and the attachment hole 45H from the drain oil passage 451. This is because the drain oil may ooze out of the contact portion between the stem 43 and the cover 45 and an oil leakage may occur in relation to the presence of the drain oil passage 451 in the cover 45.

The stem 43 has a small diameter part incorporating the slewing axis AX at the lower end thereof, and a large diameter part extending upward from the small diameter part. The lower surface portion of the stem 43 corresponds to a lower surface portion of the small diameter part. The rod hole 431 communicates with the lower surface portion of the small diameter part. In contrast, the cover 45 has a cylindrical inner part for receiving the small diameter part 43 of the stem 43 therein, and an upper surface portion to be in contact with the lower surface portion of the large diameter part of the stem (FIG. 6). The cover 47 is fitted in the lower portion of the cylindrical inner part of the cover 45 from below. The sealant 6 is disposed between an inner circumference of the cover 45 and an outer circumference of the small diameter part of the stem 43 to suppress an inflow of the drain oil from the drain oil passage 451 into the rod hole 431.

Each of the four vertical holes 435 serves as an oil passage for supplying and discharging the hydraulic oil between the control valve 36 and the traveling motor 21. In Fig. 9, one of the four vertical holes 435 is shown. The vertical hole 435 has a configuration similar to that of a prior art (e.g., Patent Literature 1).

According to the above-described embodiment, the rod 53 is inserted through the rod hole 431 which keeps the oil from passing therethrough. This configuration eliminates the possibility of the oil leakage even at the insertion and withdrawal of the rod 53 for a maintenance operation. Furthermore, the drain hole 433 is independent of the rod hole 431 and communicates with the drain oil passage 451 of the cover 45 fixedly mounted to the body 41. Hence, the cover 45 remains fixedly mounted to the body 41 even when the cover 45 is detached from the cover 47. In this manner, the drain hole 433 is kept closed. This eliminates the possibility of the oil leakage from the drain hole 433. Consequently, the swivel joint 4 according to the embodiment can facilitate replacement of the rod 53, and has a high maintainability of the sensor unit 5 including the rod 53.

Moreover, according to the above-described embodiment, the rotation angle sensor 51 and the magnet 55 avoid coming into contact with the hydraulic oil. Accordingly, these components need no oil resistance.

The above-described embodiment can additionally adopt an angle detection function without a significant change in the layout of the hydraulic excavator 1. Besides, the attachability and detachability of the swivel joint can compete against those of a typical swivel joint.

Furthermore, according to the above-described embodiment, the rod 53 fastened to the cover 47 can be taken out by detaching the cover 47 from the cover 45. In this way, the magnet 55 is replaceable without detaching the body 41 or the stem 43 of the swivel joint 4 from a main body of the excavator.

Further, according to the above-described embodiment, the collar 57 is located on the distal end of the rod 53. This prevents the run-out of the rod 53, and keeps the magnet 55 staying in a sensing area of the rotation angle sensor 51 without deviating therefrom. Also, the collar 57 made of a nonmagnetic resin material prevents the inner circumference defining the rod hole 431 of the stem 43 from being worn out.

According to the above-described embodiment, the magnet 55 is directly arranged in the countersink (recess) at the distal end of the rod 53 through adhesion with the adhesive. This eliminates the necessity of adding another nonmagnetic member between the magnet 55 and the rod 53 serving as a magnetic member, thereby achieving a decrease in the number of components.

The swivel joint for a construction machine according to the present invention is not limited to the above-described embodiment, and various modifications and improvements are applicable within the scope of the claims.

In the above-described embodiment, for example, the cover 45 is fixedly mounted to the body 41, and the cover 47 including the rod 53 is configured to be attachable to and detachable from the cover 45 as shown in FIG. 7, but the configuration should not be limited thereto. For instance, the swivel joint may be configured to include a cover fixedly mounted to a body 41 and a rod which can be directly fastened to the cover. In other words, the swivel joint may be configured to include a single cover and a rod which can be fastened to the cover.

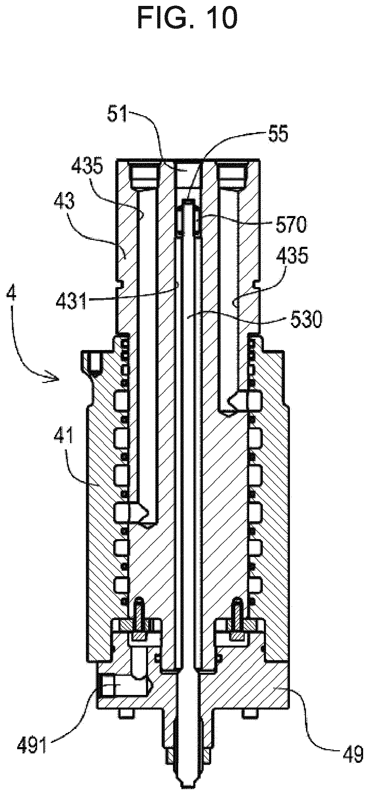

Specifically, in a swivel joint according to a modified embodiment of the present invention, a cover 49 having a drain oil passage 491 is fixedly mounted to a body 41 as shown in Fig. 10. Further, a rod 530 has a rod proximal end configured to be fastened to the cover 49 in a threaded engagement. The rod proximal end of the rod 530 to be fastened to the cover 49 has a diameter larger than a diameter of a collar 570.

The modified embodiment can decrease the number of components constituting the swivel joint 4. This consequently succeeds in an assembly tolerance reduction and suppression of the run-out of the rod 530 from the swivel joint 4 (specifically, the rod hole 431 of the stem 43).

Conclusively, the configuration according to the present invention is suitable for use in a swivel joint or the like for a hydraulic excavator, which includes a sensor unit for detecting a slewing angle of an upper slewing body.

Provided by the present invention is a swivel joint for a construction machine which includes a lower traveling body having a lower pipe, an upper slewing body having an upper pipe, and a slewing section for connecting the lower traveling body and the upper slewing body with each other in such a manner that the upper slewing body is slewable about a slewing central axis extending in a vertical direction, the swivel joint being provided in the slewing section. The swivel joint includes: a body fixedly attachable to the lower traveling body, having a hollow cylindrical shape centered on the slewing central axis, and having an upper opening and a lower opening; a lower cover mounted to the body to close the lower opening of the body, and having an attachment hole vertically extending through the lower cover along the slewing central axis; a stem fixedly attachable to the upper slewing body, having a cylindrical shape centered on the slewing central axis, and fitted in a cylindrical inner part of the body through the upper opening of the body rotatably about the slewing central axis relative to the body; and a sensor unit for detecting a slewing angle of the upper slewing body with respect to the lower traveling body. The stem has a lower surface portion facing the lower cover, and is formed with: a sensor placement space overlapping the slewing central axis; a rod insertion hole extending along the slewing central axis and communicating the sensor placement space and the lower surface portion with each other to face the attachment hole; and a stem-side drain oil passage spaced radially outward from the rod insertion hole therein and communicating with the upper pipe for permitting a drain oil to flow in the vertical direction. The lower cover has a cover-side drain oil passage isolated from the rod insertion hole and the attachment hole for communicating the stem-side drain oil passage of the stem and the lower pipe with each other in a state where the lower cover is mounted to the body. The sensor unit includes: a rotation angle sensor placed in the sensor placement space of the stem in such a manner as to be rotatable integrally with the stem about the slewing central axis; and a rod extending in the vertical direction. The rod has a rod distal end provided with a detection target to be detected by the rotation angle sensor, and a rod proximal end which is detachably attached in the attachment hole of the lower cover so that the rod distal end is inserted through the rod insertion hole from the attachment hole of the lower cover to a position where the detection target is detected by the rotation angle sensor and that the rod distal end is withdrawn below the attachment hole from the rod insertion hole in the state where the lower cover is mounted to the body. The rod is rotatable with the body relative to the stem about the slewing central axis.

According to this configuration, the rod is inserted into the rod insertion hole spaced from the stem-side drain oil passage. Hence, an oil leakage from the rod insertion hole is suppressed even at the insertion and withdrawal of the rod. Accordingly, the swivel joint for a construction machine according to the present invention can facilitate replacement of the rod provided with the detection target, and has a high maintainability.

This configuration preferably further includes an auxiliary cover holding the rod proximal end and detachably attached to the lower cover in such a manner as to close the attachment hole of the lower cover.

In this configuration, the stem-side oil passage is spaced from the rod insertion hole and communicates with the cover-side drain oil passage of the lower cover fixedly mounted to the body. Thus, the stem-side drain oil passage is kept closed even when the auxiliary cover is detached from the lower cover. This configuration suppresses the oil leakage from the stem-side drain oil passage.

In the configuration, it is desired that the auxiliary cover and the rod proximal end are separably fastened to each other in a threaded engagement.

In the configuration, the sensor unit preferably further includes: a restrictive member located on the rod distal end and having an outer diameter larger than an outer diameter of the rod for restricting a relative position of the detection target to the rotation angle sensor in a direction perpendicularly intersecting an axial direction of the slewing central axis, and the attachment hole preferably has an inner diameter larger than the outer diameter of the restrictive member.

In this configuration, the restrictive member is desirably made of a nonmagnetic resin material.

In this configuration, it is desirable that the rod distal end has a recess facing the rotation angle sensor, and that the detection target includes a magnet arranged in the recess and adhered to the rod distal end.

This configuration desirably further includes: a sealant disposed between the stem and the lower cover for keeping an oil from flowing into the insertion space and the attachment hole from the cover-side oil passage.

## Claims

1. A swivel joint (4) for a construction machine (1) which includes a lower traveling body (2) having a lower pipe (52), an upper slewing body (3) having an upper pipe (50), and a slewing section (1S) for connecting the lower traveling body (2) and the upper slewing body (3) with each other in such a manner that the upper slewing body (3) is slewable about a slewing central axis (AX) extending in a vertical direction, the swivel joint (4) to be provided in the slewing section (1S) and comprising:
a body (41) fixedly attachable to the lower traveling body (2), having a hollow cylindrical shape centered on the slewing central axis (AX), and having an upper opening and a lower opening;
a lower cover (45) mounted to the body (41) to close the lower opening of the body (41), and having an attachment hole (45H) vertically extending so as to overlap the slewing central axis (AX);
a stem (43) fixedly attachable to the upper slewing body (3), having a cylindrical shape centered on the slewing central axis (AX), and fitted in a cylindrical inner part of the body (41) through the upper opening of the body (41) rotatably about the slewing central axis (AX) relative to the body (41); and
a sensor unit (5) for detecting a slewing angle of the upper slewing body (3) with respect to the lower traveling body (2), wherein
the stem (43) has a lower surface portion facing the lower cover (45), and is formed with:
a sensor placement space (430) overlapping the slewing central axis (AX);
a rod insertion hole (431) extending along the slewing central axis (AX) and communicating the sensor placement space (430) and the lower surface portion with each other to face the attachment hole (45H); and
a stem-side drain oil passage (433) spaced radially outward from the rod insertion hole (431) in the stem (43) and configured to communicate with the upper pipe (50) for permitting a drain oil to flow in the vertical direction, and
the sensor unit (5) includes:
a rotation angle sensor (51) placed in the sensor placement space (430) of the stem (43) in such a manner as to be rotatable integrally with the stem (43) about the slewing central axis (AX); and
a rod (53) extending in the vertical direction, and having a rod distal end (53A) provided with a detection target (55) to be detected by the rotation angle sensor (51), and a rod proximal end (53B) which is detachably attached in the attachment hole (45H) of the lower cover (45) so that the rod distal end (53A) is inserted through the rod insertion hole (431) from the attachment hole (45H) of the lower cover (45) to a position where the detection target (55) is detected by the rotation angle sensor (51), the rod (53) being rotatable with the body (41) about the slewing central axis (AX) relative to the stem (43),
**characterized in that**
the attachment hole (45H) penetrates the lower cover (45),
the rod distal end (53A) is withdrawn below the attachment hole (45H) from the rod insertion hole (431) in the state where the lower cover (45) is mounted to the body (41), and
the lower cover (45) has a cover-side drain oil passage (451) isolated from the rod insertion hole (431) and the attachment hole (45H) and configured to communicate the stem-side drain oil passage (433) of the stem (43) and the lower pipe (52) with each other in a state where the lower cover (45) is mounted to the body (41).

2. The swivel joint (4) for a construction machine (1) according to claim 1, further comprising:
an auxiliary cover (47) holding the rod proximal end (53B) and detachably attached to the lower cover (45) in such a manner as to close the attachment hole (45H) of the lower cover (45).

3. The swivel joint (4) for a construction machine (1) according to claim 2, wherein
the auxiliary cover (47) and the rod proximal end (53B) are separably fastened to each other in a threaded engagement.

4. The swivel joint (4) for a construction machine (1) according to any one of claims 1 to 3, wherein
the sensor unit (5) further includes a restrictive member (57) located on the rod distal end (53A) and having an outer diameter larger than an outer diameter of the rod (53) for restricting a relative position of the detection target (55) to the rotation angle sensor (51) in a direction perpendicularly intersecting an axial direction of the slewing central axis (AX), and
the attachment hole (45H) has an inner diameter larger than the outer diameter of the restrictive member (57).

5. The swivel joint (4) for a construction machine (1) according to claim 4, wherein
the restrictive member (57) is made of a nonmagnetic resin material.

6. The swivel joint (4) for a construction machine (1) according to any one of claims 1 to 5, wherein
the rod distal end (53A) has a recess facing the rotation angle sensor (51), and
the detection target (55) includes a magnet arranged in the recess and adhered to the rod distal end (53A).

7. The swivel joint (4) for a construction machine (1) according to any one of claims 1 to 6, further comprising:
a sealant (6) disposed between the stem (43) and the lower cover (45) for keeping an oil from flowing into the rod insertion hole (431) and the attachment hole (45H) from the cover-side drain oil passage (451).

## Patentansprüche

1. Drehgelenk (4) für eine Baumaschine (1), die einen unteren Fahrkörper (2) mit einem unteren Rohr (52), einen oberen Schwenkkörper (3) mit einem oberen Rohr (50) und einen Schwenkabschnitt (1S) aufweist, um den unteren Fahrkörper (2) und den oberen Schwenkkörper (3) auf eine solche Weise miteinander zu verbinden, dass der obere Schwenkkörper (3) um eine sich in einer vertikalen Richtung erstreckende Schwenkmittelachse (AX) herum schwenkbar ist, wobei das Drehgelenk (4) in dem Schwenkabschnitt (1S) vorzusehen ist und Folgendes umfasst:
einen Körper (41), der fest an dem unteren Fahrkörper (2) anbringbar ist, der eine Hohlzylinderform hat, die auf der Schwenkmittelachse (AX) zentriert ist, und der eine obere Öffnung und eine untere Öffnung hat;
eine untere Abdeckung (45), die an dem Körper (41) montiert ist, um die untere Öffnung des Körpers (41) zu verschließen, und die ein Anbringungsloch (45H) hat, das sich vertikal so erstreckt, dass es die Schwenkmittelachse (AX) überlappt;
eine Spindel (43), die fest an dem oberen Schwenkkörper (3) anbringbar ist, die eine Zylinderform hat, die auf der Schwenkmittelachse (AX) zentriert ist, und die durch die obere Öffnung des Körpers (41) hindurch relativ zum Körper (41) um die Schwenkmittelachse (AX) herum drehbar in einem zylindrischen Innenteil des Körpers (41) eingepasst ist; und
eine Sensoreinheit (5) zum Erfassen eines Schwenkwinkels des oberen Schwenkkörpers (3) bezüglich des unteren Fahrkörpers (2), wobei
die Spindel (43) einen unteren Oberflächenabschnitt hat, der der unteren Abdeckung (45) zugewandt ist, und mit Folgendem ausgebildet ist:
einem Sensorplatzierungsraum (430), der die Schwenkmittelachse (AX) überlappt;
einem Stabeinführloch (431), das sich so entlang der Schwenkmittelachse (AX) erstreckt und das den Sensorplatzierungsraum (430) und den unteren Oberflächenabschnitt so miteinander verbindet, dass es dem Anbringungsloch (45H) gegenübersteht; und
einem spindelseitigen Ablassöldurchlass (433), der radial nach außen von dem Stabeinführloch (431) in der Spindel (43) beabstandet ist und der so konfiguriert ist, dass er mit dem oberen Rohr (50) in Verbindung steht, um einem Ablassöl zu gestatten, in der vertikalen Richtung zu fließen, und
die Sensoreinheit (5) Folgendes aufweist:
einen Drehwinkelsensor (51), der in dem Sensorplatzierungsraum (430) der Spindel (43) auf eine solche Weise platziert ist, dass er als eine Einheit mit der Spindel (43) um die Schwenkmittelachse (AX) herum drehbar ist; und
einen Stab (53), der sich in der vertikalen Richtung erstreckt und der ein fernes Stabende, das mit einem vom Drehwinkelsensor (51) zu erfassenden Erfassungsziel (55) versehen ist, und ein nahes Stabende (53B) hat, das lösbar in dem Anbringungsloch (45H) der unteren Abdeckung (45) angebracht ist, sodass das ferne Stabende (53A) von dem Anbringungsloch (45H) der unteren Abdeckung (45) aus durch das Stabeinführloch (431) zu einer Position eingeführt ist, wo das Erfassungsziel (55) von dem Drehwinkelsensor (51) erfasst wird, wobei der Stab (53) relativ zur Spindel (43) mit dem Körper (41) um die Schwenkmittelachse (AX) herum drehbar ist,
**dadurch gekennzeichnet, dass**
das Anbringungsloch (45H) die untere Abdeckung (45) durchdringt,
das ferne Stabende (53A) von dem Stabeinführloch (431) aus in dem Zustand, in dem die untere Abdeckung (45) an dem Körper (41) montiert ist, unter das Anbringungsloch (45H) zurückgezogen wird und
die untere Abdeckung (45) einen abdeckungsseitigen Ablassöldurchlass (451) hat, der von dem Stabeinführloch (431) und dem Anbringungsloch (45H) isoliert ist und der so konfiguriert ist, dass er in einem Zustand, in dem die untere Abdeckung (45) an dem Körper (41) montiert ist, den spindelseitigen Ablassöldurchlass (433) der Spindel (43) und das untere Rohr (52) miteinander verbindet.

2. Drehverbindung (4) für eine Baumaschine (1) nach Anspruch 1, die außerdem Folgendes umfasst:
eine Hilfsabdeckung (47), die das nahe Stabende (53B) hält und auf eine solche Weise lösbar an der unteren Abdeckung (45) angebracht ist, dass sie das Anbringungsloch (45H) der unteren Abdeckung (45) verschließt.

3. Drehgelenk (4) für eine Baumaschine (1) nach Anspruch 2, wobei
die Hilfsabdeckung (47) und das nahe Stabende (53B) in einer Verschraubung trennbar aneinander festgemacht sind.

4. Drehgelenk (4) für eine Baumaschine (1) nach einem der Ansprüche 1 bis 3, wobei
die Sensoreinheit (5) außerdem ein Beschränkungselement (57) aufweist, das sich auf dem fernen Stabende (53A) befindet und das einen Außendurchmesser hat, der größer als ein Außendurchmesser des Stabs (53) ist, um eine Relativposition des Erfassungsziels (55) zum Drehwinkelsensor (51) in einer Richtung zu beschränken, die eine axiale Richtung der Schwenkmittelachse (AX) senkrecht schneidet, und
das Anbringungsloch (45H) einen Innendurchmesser hat, der größer als der Außendurchmesser des Beschränkungselements (57) ist.

5. Drehgelenk (4) für eine Baumaschine (1) nach Anspruch 4, wobei
das Beschränkungselement (57) aus einem nichtmagnetischen Harzmaterial besteht.

6. Drehgelenk (4) für eine Baumaschine (1) nach einem der Ansprüche 1 bis 5, wobei
das ferne Stabende (53A) eine Vertiefung hat, die dem Drehwinkelsensor (51) zugewandt ist, und
das Erfassungsziel (55) einen Magnet umfasst, der in der Vertiefung angeordnet ist und der an dem fernen Stabende (53A) haftet.

7. Drehgelenk (4) für eine Baumaschine (1) nach einem der Ansprüche 1 bis 6, das außerdem Folgendes umfasst:
ein Dichtungsmittel (6), das zwischen der Spindel (43) und der unteren Abdeckung (45) angeordnet ist, um ein Öl davon abzuhalten, von dem abdeckungsseitigen Ablassöldurchlass (451) aus in das Stabeinführloch (431) und das Anbringungsloch (45H) zu fließen.

## Revendications

1. Joint articulé (4) pour une machine de construction (1) qui comporte un corps de déplacement inférieur (2) ayant un tuyau inférieur (52), un corps pivotant supérieur (3) ayant un tuyau supérieur (50), et une section de pivotement (1S) pour relier le corps de déplacement inférieur (2) et le corps de pivotement supérieur (3) l'un à l'autre de manière à ce que le corps de pivotement supérieur (3) puisse pivoter autour d'un axe central de pivotement (AX) s'étendant dans une direction verticale, le joint articulé (4) devant être fourni dans la section de pivotement (1S) et comprenant :
un corps (41) qui peut être attaché de façon fixe au corps de déplacement inférieur (2), ayant une forme cylindrique creuse centrée sur l'axe central de pivotement (AX), et ayant une ouverture supérieure et une ouverture inférieure ;
un couvercle inférieur (45) monté sur le corps (41) pour fermer l'ouverture inférieure du corps (41), et ayant un trou de fixation (45H) s'étendant verticalement de façon à chevaucher l'axe central de pivotement (AX) ;
une tige (43) qui peut être attachée de façon fixe au corps pivotant supérieur (3), ayant une forme cylindrique centrée sur l'axe central de pivotement (AX), et installée dans une partie intérieure cylindrique du corps (41) à travers l'ouverture supérieure du corps (41) de manière rotative autour de l'axe central de pivotement (AX) par rapport au corps (41) ; et
une unité de détection (5) pour détecter un angle de pivotement du corps de pivotement supérieur (3) par rapport au corps de déplacement inférieur (2), dans lequel
la tige (43) a une partie de surface inférieure faisant face au couvercle inférieur (45), et est formée avec :
un espace de placement du capteur (430) chevauchant l'axe central de pivotement (AX) ;
un trou d'insertion de la tige (431) qui s'étend le long de l'axe central de pivotement (AX) et qui fait communiquer l'espace de placement du capteur (430) et la partie de la surface inférieure pour faire face au trou de fixation (45H) ; et
un passage d'huile de vidange côté tige (433) espacé radialement de l'extérieur du trou d'insertion de la tige (431) dans la tige (43) et configuré pour communiquer avec le tuyau supérieur (50) afin de permettre à une huile de vidange de s'écouler dans la direction verticale, et
l'unité de détection (5) comporte :
un capteur d'angle de rotation (51) placé dans l'espace de placement du capteur (430) de la tige (43) de manière à pouvoir tourner intégralement avec la tige (43) autour de l'axe central de pivotement (AX) ; et
une tige (53) s'étendant dans la direction verticale, et ayant une extrémité distale de tige (53A) fournie d'une cible de détection (55) à détecter par le capteur d'angle de rotation (51), et une extrémité proximale de tige (53B) qui est fixée de manière amovible dans le trou de fixation (45H) du couvercle inférieur (45) de sorte que l'extrémité distale de tige (53A) est insérée à travers le trou d'insertion de tige (431) depuis le trou de fixation (45H) du couvercle inférieur (45) jusqu'à une position où la cible de détection (55) est détectée par le capteur d'angle de rotation (51), la tige (53) pouvant tourner avec le corps (41) autour de l'axe central de pivotement (AX) par rapport à la tige (43),
**caractérisé en ce que**
le trou de fixation (45H) pénètre le couvercle inférieur (45),
l'extrémité distale de la tige (53A) est retirée sous le trou de fixation (45H) du trou d'insertion de la tige (431) dans l'état où le couvercle inférieur (45) est monté sur le corps (41), et
le couvercle inférieur (45) a un passage d'huile de vidange côté couvercle (451) isolé du trou d'insertion de la tige (431) et du trou de fixation (45H) et configuré pour faire communiquer le passage d'huile de vidange côté tige (433) de la tige (43) et le tuyau inférieur (52) l'un avec l'autre dans un état où le couvercle inférieur (45) est monté sur le corps (41).

2. Joint articulé (4) pour une machine de construction (1) selon la revendication 1, comprenant en outre :
un couvercle auxiliaire (47) maintenant l'extrémité proximale de la tige (53B) et fixé de manière amovible au couvercle inférieur (45) de manière à fermer le trou de fixation (45H) du couvercle inférieur (45).

3. Joint articulé (4) pour une machine de construction (1) selon la revendication 2, dans lequel
le couvercle auxiliaire (47) et l'extrémité proximale de la tige (53B) sont fixés séparément l'un à l'autre dans un engagement fileté.

4. Joint articulé (4) pour une machine de construction (1) selon l'une quelconque des revendications 1 à 3, dans lequel
l'unité de détection (5) comporte en outre un élément restrictif (57) situé sur l'extrémité distale de la tige (53A) et ayant un diamètre extérieur supérieur à un diamètre extérieur de la tige (53) pour restreindre une position relative de la cible de détection (55) par rapport au capteur d'angle de rotation (51) dans une direction coupant perpendiculairement une direction axiale de l'axe central de pivotement (AX), et
le trou de fixation (45H) a un diamètre intérieur supérieur au diamètre extérieur de l'élément restrictif (57).

5. Joint articulé (4) pour une machine de construction (1) selon la revendication 4, dans lequel
l'élément restrictif (57) est constitué d'un matériau en résine non magnétique.

6. Joint articulé (4) pour une machine de construction (1) selon l'une quelconque des revendications 1 à 5, dans lequel
l'extrémité distale de la tige (53A) a une cavité faisant face au capteur d'angle de rotation (51), et
la cible de détection (55) comporte un aimant disposé dans le cavité et adhéré à l'extrémité distale de la tige (53A).

7. Joint articulé (4) pour une machine de construction (1) selon l'une quelconque des revendications 1 à 6, comprenant en outre :
un scellant (6) disposé entre la tige (43) et le couvercle inférieur (45) pour empêcher une huile de s'écouler dans le trou d'insertion de la tige (431) et le trou de fixation (45H) à partir du passage d'huile de vidange côté couvercle (451).
